# EUROPEAN PATENT APPLICATION

(11) **EP 4 845 140 A1**
(43) Date of publication of application: **25.11.2026**
(21) Application number: 26179296.4
(22) Date of filing: 18.05.2026
(51) Int. Cl.: H04N 1/60, H04N 1/00, G01J 3/52

(54) **JUDGEMENT APPARATUS, IMAGE FORMING APPARATUS, JUDGEMENT METHOD, AND PROGRAM**

(30) Priority: 19.05.2025 JP 2025083185
(71) Applicant: Konica Minolta, Inc., Tokyo 100-7015 (JP)
(72) Inventor: SHIRASAKA, Satoru, Tokyo, 100-7015 (JP)
(74) Representative: MFG Patentanwälte Meyer-Wildhagen Meggle-Freund Gerhard PartG mbB

(57) **Abstract**

A judgement apparatus includes a hardware processor (10). The hardware processor obtains colorimetric data of a patch image (400) from a colorimetry device (72), the colorimetry device performing colorimetry of the patch image formed on a recording medium (200) while relatively changing a colorimetry position in a predetermined direction with respect to the recording medium. The hardware processor compares the colorimetric data with reference data of the patch image. The hardware processor judges whether the colorimetry device has performed colorimetry of a target patch that is a patch image as a colorimetry target among the patch image.

## Description

### BACKGROUND OF THE INVENTION

### TECHNICAL FIELD

The present disclosure relates to a judgement apparatus, an image forming apparatus, a judgement method, and a program.

### DESCRIPTION OF RELATED ART

Conventionally, a colorimetry process is performed in which a colorimetry device performs colorimetry of a test chart to check whether an image forming apparatus forms an image in desired colors.

As a method of judging whether the colorimetry process is performed properly, for example, Japanese Unexamined Patent Application Publication No. 2007-178200 describes a method of comparing a colorimetry value obtained by a colorimetry head performing colorimetry of a patch image formed on a recording medium by an image forming apparatus with reference data stored beforehand.

### SUMMARY OF THE INVENTION

However, in a case where it is determined that the colorimetry process is not being performed properly, JP2007-178200A does not disclose a method for identifying whether the cause of the improper colorimetry process lies in the image forming apparatus or in the colorimetry device. Therefore, the user must identify the cause, which takes time and effort.

The present disclosure has been made in view of such circumstances. An object of the present disclosure is to provide a judgement apparatus, an image forming apparatus, a judgement method, and a program that can more easily identify a cause when the colorimetry process is not being performed properly.

To achieve at least one of the abovementioned objects, according to an aspect of the present invention, a judgement apparatus includes a hardware processor that: obtains colorimetric data of a patch image from a colorimetry device, the colorimetry device performing colorimetry of the patch image formed on a recording medium while relatively changing a colorimetry position in a predetermined direction with respect to the recording medium, compares the colorimetric data with reference data of the patch image, and judges whether the colorimetry device has performed colorimetry of a target patch, the target patch being a patch image as a colorimetry target among the patch image.

### BRIEF DESCRIPTION OF THE DRAWINGS

The advantages and features provided by one or more embodiments of the invention will become more fully understood from the detailed description given hereinbelow and the appended drawings, which are provided by way of illustration only and are not intended to define the limits of the present invention, wherein:
FIG. 1 is a side sectional view of an image forming apparatus;
FIG. 2 is a block diagram of the image forming apparatus;
FIG. 3 is a diagram illustrating an example of a colorimetry chart; and
FIG. 4 is a flowchart of a colorimetry process.

### DETAILED DESCRIPTION

The following description will describe one or more embodiments of the present disclosure with reference to the drawings. The advantages and features of one or more embodiments of the present disclosure will be understood from the following detailed description and the accompanying drawings. The following detailed description and drawings are provided by way of illustration only and do not limit the scope of the present disclosure.

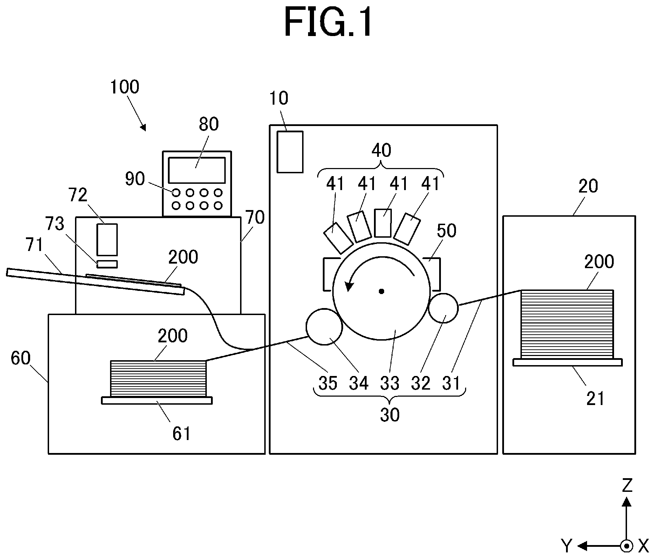

Hereinafter, the X-direction, the Y-direction, and the Z-direction are as shown in FIG. 1. In the following description, the X direction, the Y direction, and the Z direction are also referred to as the width direction, the conveyance direction, and the height direction, respectively.

### [Overall Configuration of image forming apparatus]

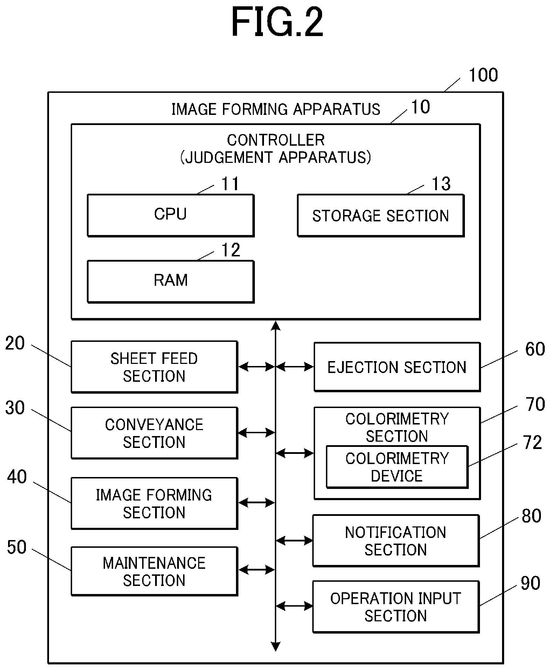

FIG. 1 is a schematic configuration diagram of an image forming apparatus 100 including a judgement apparatus according to the present embodiment. FIG. 2 is a block diagram illustrating a functional configuration of the image forming apparatus 100 according to the present embodiment. In the following, the description will be made on the assumption that an image forming section 40 (image former), which will be described later, includes a plurality of inkjet heads and that the image forming apparatus 100 is an inkjet recording apparatus configured to form an image on a recording medium 200 by an inkjet method. However, the image forming apparatus 100 is not limited to an inkjet recording apparatus, and may be, for example, a laser printer that forms an image by an electrophotographic method.

As illustrated in FIG. 1 and FIG. 2, the image forming apparatus 100 includes a controller 10 (a hardware processor), a sheet feed section 20, a conveyance section 30, an image forming section 40, a maintenance section 50, an ejection section 60, a colorimetry section 70, a notification section 80, and an operation input section 90. The components of the image forming apparatus 100 are connected via a bus.

### (Sheet Feed Section)

The sheet feed section 20 includes, for example, a sheet feed tray 21 configured to store the recording medium 200, and stores the recording medium 200 in the sheet feed tray 21. As will be described later, various media can be used as the recording medium 200. Therefore, as shown in FIG. 1, the sheet feed section 20 may include a plurality of sheet feed trays 21 in which various types of recording media 200 are stored.

### (Recording Medium)

As the recording medium 200, various media can be used as long as ink having landed on the surface thereof can be fixed. Examples of the recording medium 200 include paper, textile, and a resin sheet.

### (Conveyance Section)

The conveyance section 30 conveys the recording medium 200 in the conveyance direction. As shown in FIG. 1, the conveyance section 30 includes, for example, a feeder board 31, a first delivery drum 32, a conveyance drum 33, a second delivery drum 34, and a delivery section 35.

### {Feeder Board, First Delivery Drum}

The feeder board 31 conveys the recording medium 200 from the sheet feed section 20 to the first delivery drum 32. The first delivery drum 32 holds and picks up one end of the recording medium 200 conveyed by the feeder board 31 and transfers the recording medium 200 to the conveyance drum 33.

### {Conveyance Drum}

The conveyance drum 33 is cylindrical. The circumferential side surface of the conveyance drum 33 serves as a conveyance surface that suctions and holds the recording medium 200. With the recording medium 200 held on the conveyance surface, the conveyance drum 33 rotates in the conveyance direction about a central axis extending in the width direction, which is orthogonal to the conveyance direction. Thus, the conveyance drum 33 conveys the recording medium 200 that is being suctioned and held on the conveyance surface along the conveyance surface.

### {Second Delivery Drum}

The second delivery drum 34 holds and picks up one end of the recording medium 200 conveyed by the conveyance drum 33 and transfers the recording medium 200 to the delivery section 35.

### {Delivery Section}

The delivery section 35 is a delivery path of the recording medium 200 and delivers the recording medium 200 to the ejection section 60 or to the colorimetry section 70. The delivery section 35 includes, for example, a belt and one or more rollers. When the image forming apparatus 100 includes the ejection section 60 and the colorimetry section 70, the discharge path in the delivery section 35 may branch midway, as illustrated in FIG. 1.

### (Image Forming Section)

The image forming section 40 forms an image on the recording medium 200 based on image data obtained from the controller 10. The image forming section 40 includes one or more head units arranged in the width direction and each having a length (width) that covers the entire recording medium 200. That is, the image forming apparatus 100 according to the present embodiment is a one-pass (single-pass, line-head) inkjet recording apparatus.

### {Head Unit}

Each head unit includes one or more inkjet heads 41. The head unit includes the ink ejection face at a position facing the conveyance surface of the conveyance drum 33. The head unit forms an image by ejecting ink onto the recording medium 200 held by the conveyance drum 33 at an appropriate timing in accordance with the rotation of the conveyance drum 33.

In the image forming apparatus 100 illustrated in FIG. 1, the four head units are arranged at a predetermined interval in order from the upstream side in the rotation direction of the conveyance drum 33. The four head units eject inks of four colors, for example, yellow (Y), magenta (M), cyan (C), and black (K), respectively.

The image forming section 40 performs a normal job, a colorimetry job, and the like. The normal job is a print job for forming, on the recording medium 200, a normal image that is not subject to colorimetry by the colorimetry device 72 described later, based on a print job obtained from an external device (not illustrated). The colorimetry job is a print job for forming, on the recording medium 200, a colorimetry chart 300 that is subject to colorimetry by the colorimetry device 72.

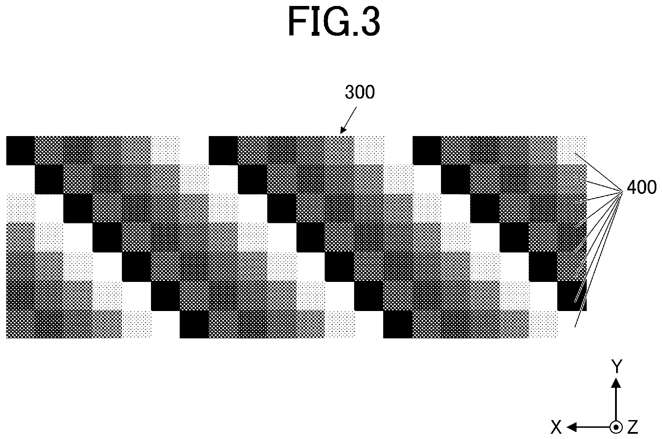

An example of the colorimetry chart 300 is shown in FIG. 3. The colorimetry chart 300 includes a plurality of patch images 400 having different gradation values, such as primary colors (C, M, Y, and K) and secondary colors (mixtures of the primary colors), and is used by the colorimetry device 72 to perform colorimetry.

The image forming section 40 may include a reading device that irradiates the recording medium 200 with light from a light source and reads a reflected image and/or a fixing section that fixes ink ejected onto the recording medium 200 by the head unit, for example.

### (Maintenance Section)

The maintenance section 50 performs, as a maintenance process, for example, cleaning of the head unit. For example, the maintenance section 50 is provided at a side of the conveyance drum 33 in the width direction and performs cleaning on the head unit that has moved in the width direction.

Examples of the cleaning include wiping to wipe off and remove ink adhered to the ink ejection face of the head unit and purging to suppress occurrence of clogging by ejecting ink in the ink channel.

FIG. 1 shows a configuration in which the maintenance section 50 is provided at only one side in the width direction of the conveyance drum 33. However, the present disclosure is not limited thereto. For example, the maintenance sections 50 may be provided on both sides of the conveyance drum 33 in the width direction.

### (Ejection Section)

The recording medium 200 that has passed through the image forming section 40 is ejected to the ejection section 60. The ejection section 60 is provided separately from the colorimetry section 70. When the image forming apparatus 100 includes the ejection section 60 separately from the colorimetry section 70, the colorimetry section 70 receives only the recording medium 200 on which the colorimetry job has been performed, and the ejection section 60 receives only the recording medium 200 on which the normal job has been performed. The ejection section 60 includes, for example, an ejection tray 61 that stores the recording medium 200.

### (Colorimetry Section)

As described above, the colorimetry section 70 receives the recording medium 200 on which the colorimetry job has been performed and performs the colorimetry process (inline colorimetry) on the recording medium 200. The colorimetry section 70 includes a colorimetry tray 71 that stores the ejected recording medium 200, a colorimetry device 72 that performs the colorimetry process, and a calibration plate 73 used for calibrating the colorimetry device 72.

Specifically, in the colorimetry section 70, under the control of the controller 10, the colorimetry device 72 performs the colorimetry process on the recording medium 200 that is stationary on the colorimetry tray 71. The colorimetry process is to measure color information. For example, in the colorimetry process, the colorimetry device 72 measures colorimetric values, such as L*a*b* values. As the colorimetry device 72, a spectrophotometer that performs colorimetry by spectrally dispersing reflected light from the recording medium 200 can be used, for example.

According to a conventional printing apparatus in which a colorimetry device is installed on the conveyance route of the recording medium 200, the printing apparatus cannot perform subsequent print jobs or maintenance while waiting stabilization of color values for colorimetry. This results in low printing efficiency. Further, according to a conventional image forming system in which a colorimetry device is provided separately from the image forming apparatus 100, the user needs to manually operate the colorimetry device to perform colorimetry, which is cumbersome.

In contrast, according to the image forming apparatus 100 of the present disclosure, the recording medium 200 is ejected to the colorimetry section 70, and there the colorimetry device 72 performs colorimetry of the recording medium 200. Such a configuration allows the image forming apparatus 100 to easily perform work, such as a next print job, maintenance, and so forth, even while waiting for colorimetry and/or during colorimetry. Thus, the image forming apparatus 100 can perform both colorimetry and efficient printing. Further, since the image forming apparatus 100 includes the colorimetry device 72, the controller 10 can easily control the printing process and the colorimetry process. This reduces the user's burden. Further, by performing colorimetry on the recording medium 200 in a stationary state, the accuracy of colorimetry increases as compared with a case where colorimetry is performed on the moving recording medium 200.

In the present disclosure, "colorimetry on a recording medium in a stationary state" also includes colorimetry performed by repeating colorimetry on a part of the stationary recording medium 200 and movement of the recording medium 200.

The colorimetry device 72 is mounted on a known carriage, for example. By the movement of the carriage in the width direction, the colorimetry device 72 measures the colors of patch images 400 formed on the recording medium 200 in the width direction. First, while being moved in the width direction of the recording medium 200, the colorimetry device 72 performs colorimetry of patch images 400 in the first row in the conveyance direction of the colorimetry chart 300 formed on the stationary recording medium 200. Herein, the row of the recording medium 200 is in a range that the colorimetry device 72 can measure in a single scan. When colorimetry on the first row of the recording medium 200 is completed, the recording medium 200 is moved by one row in the conveyance direction within the colorimetry section 70. Next, while being moved in the width direction of the recording medium 200, the colorimetry device 72 performs colorimetry on the second row next to the first row in the conveyance direction on the stationary recording medium 200. When colorimetry on the second row of the recording medium 200 in the conveyance direction is completed, the recording medium 200 is again moved by one row in the conveyance direction within the colorimetry section 70.

Thus, the colorimetry according to the present disclosure does not need to be performed at one time on the stationary recording medium 200. The colorimetry may be performed while repetitively moving and stopping the recording medium 200.

Further, the method by which the colorimetry device 72 performs colorimetry on the multiple patch images 400 formed in the width direction is not limited to moving the colorimetry device 72 in the width direction. For example, the recording medium 200 may be moved in the width direction.

There is a case where the colorimetric values of the image on the recording medium 200 ejected to the colorimetry section 70 do not settle quickly because the ink is not fully dry, for example. Therefore, it is preferable that the colorimetry process is performed after an elapse of predetermined colorimetry waiting time from the ejection of the recording medium 200 to the colorimetry section 70.

The colorimetry waiting time may be adjusted according to at least one of the type of recording medium 200, the thickness of the recording medium 200, the type of ink, the image density, and the ink amount. The ink amount may be the total ink amount on the entire recording medium 200 or may be the maximum ink amount per unit area of the recording medium 200. The colorimetry waiting time may be adjusted according to at least one of the sheet-surface temperature of the recording medium 200 during printing, the temperature of the colorimetry section 70, and the humidity of the colorimetry section 70. Adjustment of the colorimetry waiting time may be done by the user or may be done under the control of the controller 10.

The colorimetry section 70 calibrates the colorimetry device 72 using the calibration plate 73 at a predetermined timing. The predetermined timing is, for example, a timing when the colorimetry section 70 is set up or a timing when a different type of recording medium 200 from the previously used recording medium is used.

The calibration plate 73 is, for example, a white tile, and is used to calibrate the colorimetry device 72. Specifically, the colorimetry device 72 obtains the colorimetry result (colorimetry value) of the calibration plate 73. Based on the colorimetry result, the reading result by the colorimetry device 72 is corrected.

### (Notification Section)

The notification section 80 is, for example, a display, and notifies various kinds of information by displaying the information on a screen. The notification section 80 is not limited to a display and may be, for example, a speaker that outputs sound or a communication section that transmits information to an external device.

### (Operation Input Section)

The operation input section 90 receives various inputs related to operations of the image forming apparatus 100 in response to user operations. The operation input section 90 includes, for example, a touch screen input/display device, up/down/left/right movement keys for operations such as data selection and data feed, and various function keys. The operation input section 90 outputs, to the CPU of the controller 10, a key press signal of a key pressed by the user or an operation signal of a mouse, for example. The operation input section 90 may be integrated with the notification section 80.

### (Controller)

The controller 10 controls operations of other functional components in accordance with print image data, print settings, and so forth. The controller 10 is a computer and includes, for example, a CPU (central processing unit) 11, a random access memory (RAM) 12, and a storage section 13.

### {CPU, RAM}

The CPU 11 executes various control programs to drive and control the image forming apparatus 100 and performs various arithmetic operations. The RAM 12 provides a working memory space for the CPU 11 and stores temporary data. The RAM 12 may include non-volatile memory.

### {Storage Section}

The storage section 13 stores programs to be executed by the CPU 11, various setting data, and the like. For example, a hard disk drive (HDD) may be used as the storage section 13, and a dynamic random access memory (DRAM) may be used in combination. The storage section 13 stores reference data to be compared with colorimetric data obtained by the colorimetry device 72. The reference data may be set values or past colorimetric data, for example.

By the CPU 11 executing a program, the controller 10 functions as a judgement apparatus including an obtaining unit, a judging unit, and an instruction unit.

### {Obtaining Unit, Judging Unit, Instruction Unit}

In the colorimetry process, the obtaining unit obtains, from the colorimetry device 72, colorimetric data obtained by the colorimetry device 72 performing colorimetry on the patch images 400 of the colorimetry chart 300. The judging unit judges whether the colorimetry device 72 is able to perform colorimetry on the patch images 400 (hereinafter referred to as "target patches") as the colorimetry target, based on the colorimetric data obtained by the obtaining unit. When it is judged that the colorimetry device 72 is not able to perform colorimetry on the target patches, the instruction unit communicates with the components of the image forming apparatus 100 to send instructions so that the colorimetry device 72 can perform colorimetry on the target patches. Details of the colorimetry process will be described later.

### [Colorimetry Process]

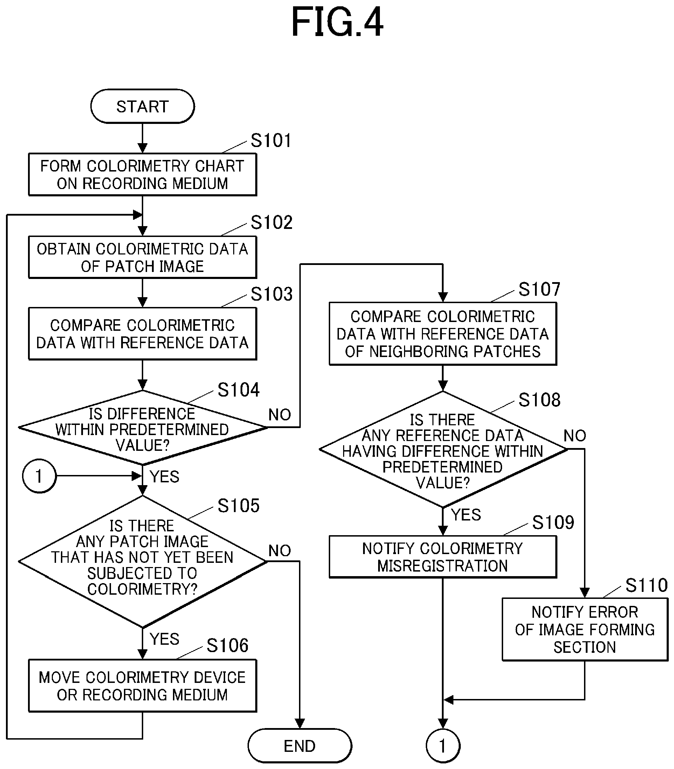

The colorimetry process performed by the image forming apparatus 100 according to the present embodiment will be described with reference to the flowchart of FIG. 4. The colorimetry process can be executed at any time in response to an operation instruction from the user via the operation input section 90. For example, the colorimetry process is performed when the image forming apparatus 100 is started up.

First, the controller 10 causes the conveyance section 30 to convey the recording medium 200 from the sheet feed section 20 and causes the image forming section 40 to form the colorimetry chart 300 that consists of multiple patch images 400 (step S101). The controller 10 causes the conveyance section 30 to convey the recording medium 200 on which the colorimetry chart 300 has been formed to the colorimetry section 70.

When the recording medium 200 is conveyed to the colorimetry section 70, the controller 10 performs colorimetry by the scanning by the colorimetry device 72. Specifically, the controller 10 moves the colorimetry device 72 in the width direction to cause the colorimetry device 72 to perform colorimetry of one target patch and obtains colorimetric data of the patch image 400 from the colorimetry device 72 (step S102).

The controller 10 compares the colorimetric data obtained in step S102 with reference data of the target patch stored in the storage section 13 (step S103). Then, the controller 10 judges whether the difference between the colorimetric data and the reference data is within a predetermined value, namely whether a color variation has occurred (step S104).

As is well known, for example, when the colorimetric data include L^{*}a^{*}b^{*} values, the controller 10 calculates a color difference ΔE76 between the colorimetric data and the reference data, based on ((ΔL^{*})² + (Δa^{*})² + (Δb^{*})²)^{1/2}, and determines whether the color difference is within a predetermined value.

When the difference is within the predetermined value (step S104: Yes) and no color variation has occurred, no problem has occurred in the colorimetry of the target patch. The controller 10 judges whether there is any patch image 400 that has not been subjected to colorimetry yet on the recording medium 200, based on image data of the colorimetry chart 300 and the obtained colorimetric data (step S105).

If there is no patch image 400 that has not been subjected to colorimetry yet (step S105: No), the colorimetry process ends. When there is a patch image 400 that has not been subjected to colorimetry yet (step S105: Yes), the controller 10 moves the recording medium 200 in the conveyance direction or moves the colorimetry device 72 in the width direction (step S106). The process then proceeds to step S102, and colorimetric data is obtained by performing colorimetry on the next patch image 400.

When the difference is greater than the predetermined value (step S104: No) and color variation has occurred, a problem has occurred in the colorimetry of the target patch. The judging unit judges whether the problem is caused by colorimetry misregistration of the colorimetry device 72 or by deterioration of the image forming section 40.

More specifically, the judging unit compares the obtained colorimetric data with reference data of neighboring patches (patch images 400) formed around the target patch (step S107). The judging unit judges whether the difference between the obtained data and any of the reference data is within a predetermined value (step S108).

When the difference between the obtained data and any of the reference data corresponding to a neighboring patch is within a predetermined value (step S108: Yes), the judging unit judges that the neighboring patch was wrongly subjected to colorimetry as the target patch, due to colorimetry misregistration of the colorimetry device 72. The controller 10 causes the notification section 80 to notify that an error has occurred in the conveyance process of the recording medium 200 by the conveyance section 30 or in the scanning by the colorimetry device 72 (or in the movement of the recording medium 200) (step S109). The controller 10 then proceeds to step S105.

On the other hand, when the difference between the obtained data and any of the reference data is not within a predetermined value (step S108: No), the judging unit judges that the image forming section 40 has formed the target patch in a different color from the specified color, owing to the deterioration of the image forming section 40. The controller 10 causes the notification section 80 to notify that an error has occurred in the process of forming the patch image 400 by the image forming section 40 (step S110). The controller 10 then proceeds to step S105.

### [Effects of Embodiment]

As described above, the judgement apparatus according to the present embodiment is the controller 10. The controller 10 functions as the obtaining unit that obtains colorimetric data of the patch image 400 from the colorimetry device 72, which performs colorimetry while relatively moving its colorimetry position in a predetermined direction with respect to the recording medium 200 on which the patch images 400 have been formed. Further, the controller 10 as the judging unit compares the colorimetric data with reference data of the patch image 400 and judges whether the colorimetry device 72 as performed colorimetry of the target patch. According to this configuration, when the colorimetry process is not performed properly, it is possible to identify whether the cause lies in a colorimetry misregistration of the colorimetry device 72, a conveyance misregistration of the conveyance section 30, or in the image forming section 40. Thus, the cause of the improper colorimetry process can be more easily identified.

### [Other Configurations]

Although the embodiment according to the present disclosure has been described above in detail, the present disclosure is not limited to the above-described embodiment. Various modifications are possible within the scope of the present disclosure recited in the appended claims and equivalents thereof.

For example, in the above description, the image forming apparatus 100 includes the colorimetry device 72, and the controller 10 functions as a judgement apparatus. However, the present disclosure is not limited thereto. For example, the image forming apparatus 100, the colorimetry device 72, and the judgement apparatus may be separate apparatuses.

In the above description, after it is determined in step S109 whether an error has occurred in any of the colorimetry device 72, the conveyance section 30, and the image forming section 40, only a notification of the determination result is provided in step S110. However, the present disclosure is not limited thereto.

For example, the controller 10 may cause the colorimetry device 72 to measure the target patch again. Alternatively, the controller 10 may judge whether the colorimetry device 72 has erroneously measured any of the patch images 400 as a target patch. Based on the determination result, the scanning (moving) direction of the colorimetry device 72 may be corrected to cause the colorimetry device 72 to perform colorimetry of the target patch again.

Alternatively, the controller 10 may cause the image forming section 40 to re-form the patch images 400 and then cause the colorimetry device 72 to perform colorimetry of the patch images 400 again. The image forming section 40 may re-form all the patch images 400 or only a target patch that caused an error. In such a configuration, the patch images 400 may be re-formed to be relatively larger than the previous patch images 400 so that an allowable value for a colorimetry misregistration of the colorimetry device 72 is increased.

In the above description, it is determined whether colorimetry has been performed for the target patch each time the colorimetry device 72 performs colorimetry for one patch image 400. However, the present disclosure is not limited thereto. For example, after the colorimetry device 72 measures the patch images 400 in one row in the conveyance direction of the colorimetry chart 300, the controller 10 as the judging unit may compare colorimetric data of each patch image 400 with reference data and judge whether colorimetry of the target patch has been performed.

In the above description, the notification section 80 provides a notification each time the colorimetry device 72 performs colorimetry of one patch image 400 and judges that an error has occurred in the conveyance section 30, the colorimetry device 72, and the image forming section 40, as an example. However, the present disclosure is not limited thereto. The controller 10 may temporarily store the judgement result in the storage section 13. When colorimetry of the colorimetry chart 300 is completed in step S105, the controller 10 may cause the notification section 80 to provide a notification of the judgement result.

In the above description, an HDD is used as a computer-readable medium for a program of the present disclosure. However, the present disclosure is not limited to this example. As another computer-readable medium, a portable recording medium such as a CD-ROM may be used. In addition, a carrier wave (carrier) may also be used as a medium for providing program data according to the present disclosure via a communication line.

Although embodiments of the present invention have been described and illustrated in detail, the disclosed embodiments are made for purposes of illustration and example only and not limitation. The scope of the present invention should be interpreted in accordance with the terms of the appended claims.

## Claims

1. A judgement apparatus comprising a hardware processor (10) that:
obtains colorimetric data of a patch image (400) from a colorimetry device (72), the colorimetry device performing colorimetry of the patch image formed on a recording medium (200) while relatively changing a colorimetry position in a predetermined direction with respect to the recording medium,
compares the colorimetric data with reference data of the patch image, and
judges whether the colorimetry device has performed colorimetry of a target patch, the target patch being a patch image as a colorimetry target among the patch image.

2. The judgement apparatus according to claim 1, wherein the hardware processor judges that the colorimetry device has not performed colorimetry of the target patch when a difference between the colorimetric data and reference data of neighboring patches formed around the target patch is equal to or less than a predetermined value.

3. The judgement apparatus according to claim 2, wherein the hardware processor compares the colorimetric data with the reference data of the neighboring patches when a difference between the colorimetric data and the reference data of the target patch is equal to or greater than a predetermined value.

4. The judgement apparatus according to claim 1, wherein the hardware processor judges that the colorimetry device has performed colorimetry of the target patch when a difference between the colorimetric data and reference data of neighboring patches formed around the target patch is greater than a predetermined value.

5. The judgement apparatus according to claim 4, wherein the hardware processor compares the colorimetric data with the reference data of the neighboring patches when a difference between the colorimetric data and reference data of the target patch is equal to or greater than a predetermined value.

6. The judgement apparatus according to claim 1, wherein in response to determining that the colorimetry device has not performed colorimetry of the target patch, the hardware processor causes the colorimetry device to perform colorimetry of the target patch again.

7. The judgement apparatus according to claim 1, wherein in response to determining that the colorimetry device has not performed colorimetry of the target patch, the hardware processor adjusts a movement direction of the colorimetry device.

8. The judgement apparatus according to claim 1, wherein in response to determining that the colorimetry device has not performed colorimetry of the target patch, the hardware processor causes an image forming apparatus (100) that formed the patch image to re-form the target patch and causes the colorimetry device to perform colorimetry of the re-formed target patch.

9. The judgement apparatus according to any one of claims 1 to 8, wherein the target patch is one patch image among the patch image.

10. The judgement apparatus according to any one of claims 1 to 8, wherein the target patch includes patch images formed in the predetermined direction.

11. An image forming apparatus (100) comprising:
the judgement apparatus (10) according to any one of claims 1 to 8;
an image forming section (40) that forms the patch image on the recording medium; and
the colorimetry device (72) that performs colorimetry of the patch image.

12. The image forming apparatus according to claim 11, wherein the image forming section includes an inkjet head that ejects ink.

13. A judgement method to be performed by a judgement apparatus (10), comprising:
obtaining colorimetric data of a patch image (400) from a colorimetry device (72), the colorimetry device performing colorimetry of the patch image formed on a recording medium (200) while relatively changing a colorimetry position in a predetermined direction with respect to the recording medium;
comparing the colorimetric data with reference data of the patch image; and
judging whether the colorimetry device has performed colorimetry of a target patch, the target patch being a patch image as a colorimetry target among the patch image.

14. A program that causes a computer of a judgement apparatus (10) to:
obtain colorimetric data of a patch image (400) from a colorimetry device (72), the colorimetry device performing colorimetry of the patch image formed on a recording medium (200) while relatively changing a colorimetry position in a predetermined direction with respect to the recording medium,
compare the colorimetric data with reference data of the patch image, and
judge whether the colorimetry device has performed colorimetry of a target patch, the target patch being a patch image as a colorimetry target among the patch image.
